# EUROPÄISCHE PATENTSCHRIFT

(11) **EP 1 063 141 B1**
(45) Veröffentlichungstag und Bekanntmachung des Hinweises auf die Patenterteilung: **25.08.2004**
(21) Anmeldenummer: 00112341.3
(22) Anmeldetag: 09.06.2000
(51) Int. Cl.: B61D 47/00, B60P 1/64, B65G 67/02

(54) **Schienenwaggon und Positionierverfahren**
Railway wagon and method of positioning
Wagon sur rails et procédé de positionnement

(30) Priorität: 23.06.1999 DE 19928435
(43) Veröffentlichungstag der Anmeldung: 27.12.2000
(73) Patentinhaber: DaimlerChrysler AG, 70567 Stuttgart (DE)
(72) Erfinder: Weidemann, Hans-Jürgen, Dr., 67346 Speyer (DE); Baier, Michael, Dipl.-Ing., 68309 Mannheim (DE); Hildebrand, Klaus-Dieter, Dipl.-Phys., 74918 Angelbachtal (DE)
(74) Vertreter: Akers, Noel James

(56) Entgegenhaltungen:
- EP-A- 0 622 288
- EP-A- 0 885 794
- DE-A- 2 624 818
- GB-A- 1 001 242

## Beschreibung

Die Erfindung bezieht sich auf einen Schienenwaggon gemäß dem Oberbegriff des Anspruchs 1 und auf ein Positionierverfahren gemäß dem Oberbegriff des Anspruchs 6. Ein solcher Schienwaggon ist z.B. aus der EP-A1-0885794 bekannt.

Beim kombinierten Verkehr von Schienenwaggons und LKW-Anhängern (Trailern) werden fahrbare Hublafetten für die automatisierte Verladung von Trailern eingesetzt. Diese Hublafetten heben mit Hilfe ihrer Hubvorrichtungen den auf dem Bahnsteig abgestellten Trailer an, transportieren ihn zum Schienenwaggon und setzen ihn dort wieder ab. In gleicher Weise bewerkstelligen die Hublafetten den umgekehrten Transportvorgang vom Schienenwaggon zum Bahnsteig.

Zum Be- und Entladen der LKW ist eine relative Positionierung der Hublafetten in Bezug auf die am Bahnsteig abgestellten Trailer notwendig. Unter einer Hublafette wird dabei ein Raupenfahrzeug mit Kettenantrieb und Hubvorrichtung verstanden. Insbesondere ist es dabei von Wichtigkeit, daß eine Hublafette derart unter einen Trailer fährt (Unterfahrt), daß sich die zur Lastaufnahme vorgesehene Traverse mit Stützpunkt der Hublafette relativ exakt unterhalb der Mitte des Trailers befindet, worauf die Hubvorrichtung der Lafette betätigt werden kann.

Der Erfindung liegt die Aufgabe zugrunde, einen Schienenwaggon der eingangs genannten Art anzugeben, mit dessen Hilfe das Be- und Entladung von Trailern auf Schienenfahrzeugen in einfacher Weise ermöglicht wird.

Des weiteren soll ein Positionierverfahren angegeben werden, mit dessen Hilfe das Be- und Entladung von Trailern auf Schienenfahrzeugen auch bei einem Versatz von Trailer und Schienenwaggon in Richtung der Längsachsen der Fahrzeuge ermöglicht wird.

Diese Aufgabe wird bezüglich des Schienenwaggons in Verbindung mit den Merkmalen des Oberbegriffes erfindungsgemäß durch die im Kennzeichen des Anspruchs 1 angegebenen Merkmale gelöst.

Die Aufgabe wird bezüglich des Positionierverfahrens in Verbindung mit den Merkmalen des Oberbegriffes erfindungsgemäß durch die im Kennzeichen des Anspruchs 6 angegebenen Merkmale gelöst.

Die mit der Erfindung erzielbaren Vorteile bestehen insbesondere darin, daß die automatische Be- und Entladung von Trailern auf Schienenfahrzeugen auch bei Auftreten eines Versatzes zwischen einem auf einem Bahnsteig befindlichen Trailer und dem Schienenwaggon in Richtung der Längsachsen der Fahrzeuge in einfacher Weise ermöglicht wird. Vorteilhaft benötigen die zum Be- und Entladen eingesetzten Hublafetten keine eigene Vorrichtung zur Einstellung ihrer Laufrichtung, was die Konstruktion und Produktion dieser Hublafetten vereinfacht.

Vorteilhafte Ausgestaltungen der Erfindung sind in den Unteransprüchen gekennzeichnet.

Weitere Vorteile des vorgeschlagenen Schienenwaggons und des vorgeschlagenen Positionierverfahrens ergeben sich aus der nachstehenden Beschreibung.

Die Erfindung wird nachstehend anhand der in der Zeichnung dargestellten Ausführungsbeispiele näher erläutert. Es zeigen:
- Fig. 1: eine Seitenansicht eines Schienenwaggons mit darauf befindlichem Trailer,
- Fig. 2: eine Sicht auf einen Schienenwaggon mit abgestelltem Trailer.

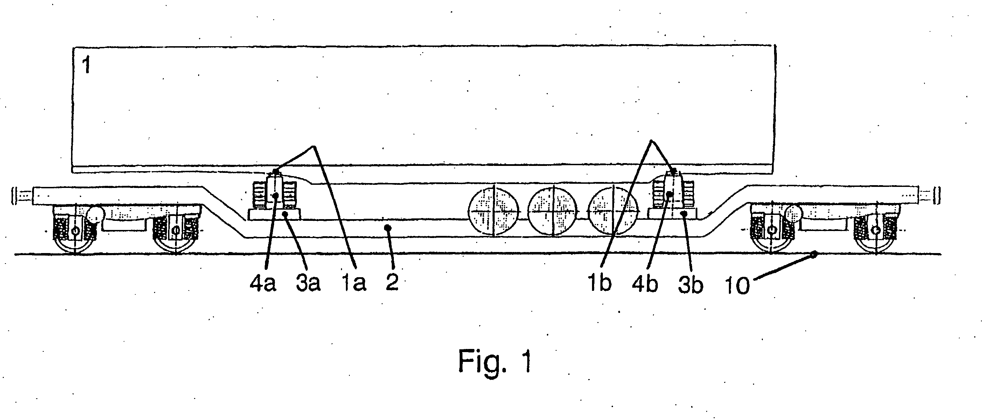

In Fig. 1 ist eine Seitenansicht eines Schienenwaggons mit darauf befindlichem Trailer dargestellt. Es ist ein mit einem Trailer (LKW-Anhänger) 1 beladenes, auf einer Schienenanlage 10 befindliches Schienenfahrzeug (Güterwaggon) 2 zu erkennen. Zur Abstützung ist der Trailer 1 mit speziellen Aufnahmepunkten 1a bzw. 1b versehen, an denen Hublafetten 4a bzw. 4b mit ihren Hubvorrichtungen angreifen. Die Hublafetten 4a bzw. 4b stützen sich andererseits über ihre Ketten auf Lafettenbrücken 3a bzw. 3b auf dem Schienenwaggon 2 ab, wobei diese Lafettenbrücken 3a und 3b drehbeweglich auf dem Schienenwaggon 2 befestigt sind.

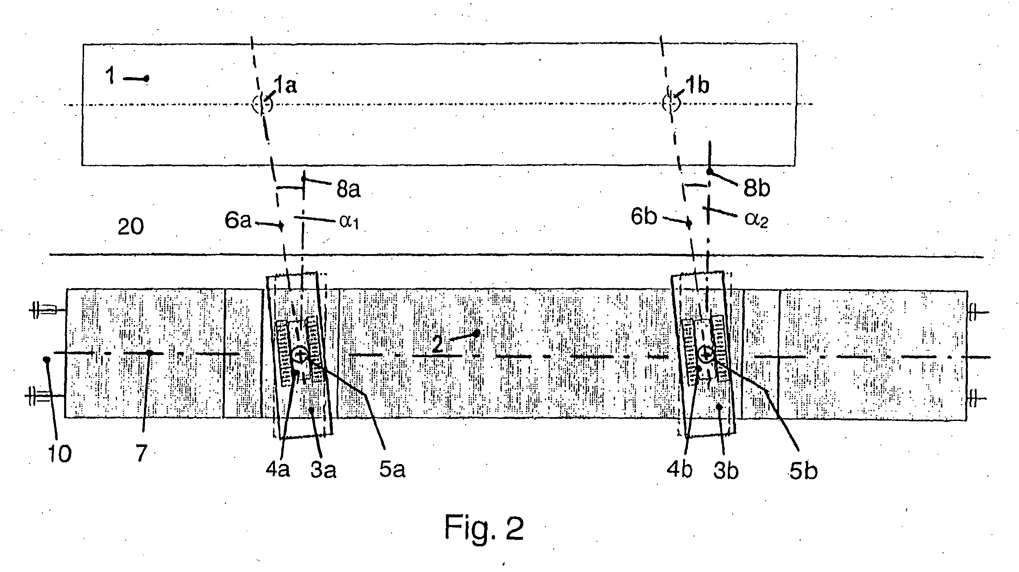

In Fig. 2 ist eine Sicht auf einen Schienenwaggon 2 mit auf einem Bahnsteig 20 abgestelltem Trailer 1 dargestellt. Es sind die auf den Lafettenbrücken 3a bzw. 3b befindlichen Hublafetten 4a bzw. 4b zu erkennen. Dabei sind die Lafettenbrücken 3a bzw. 3b um ihre vertikalen Symmetrieachsen 5a bzw. 5b derart geschwenkt, daß ihre Längsachsen 6a bzw. 6b zu den Aufnahmepunkten 1a bzw. 1b des Trailers 1 zeigen.

Dies erfolgt unter Einsatz einer auf dem Schienenwaggon 2 angeordneten Einrichtung zur Detektion (Messung) der relativen Position zwischen der vertikalen Symmetrieachse 5a, 5b mindestens einer Lafettenbrücke 3a, 3b und mindestens eines Aufnahmepunktes 1a, 1b des Trailers 1. Durch diese Messung wird die aktuelle relative Positionierungsungenauigkeit zwischen dem auf dem Bahnsteig 20 befindlichen Trailer 1 und dem Schienenwaggon 2 ermittelt, d. h. der aktuelle Versatz zwischen den Fahrzeugen in Richtung ihrer Längsachsen. Zur Korrektur dieser relativen Positionierungsungenauigkeit kann die Einstellung der Laufrichtung der Hublafetten 4a, 4b zur Be- und Entladung des Schienenwaggons 2 durch die auf dem Schienenfahrzeug drehbar gelagerten Lafettenbrücken 3a, 3b erfolgen, so daß die vorgegebene Laufrichtung der Hublafetten 4a, 4b den Längsachsen 6a, 6b der Lafettenbrücken 3a, 3b entspricht.

Nach exakter Ausrichtung der Längsachsen 6a bzw. 6b der Lafettenbrücken 3a bzw. 3b in der vorstehend erläuterten Weise durch Drehung der Lafettenbrücken 3a bzw. 3b um den Drehwinkel α₁ bzw. α₂ bezüglich der Senkrechen 8a bzw. 8b zur Längsachse 7 des Schienenwaggons 2 rollen die Hublafetten 4a bzw. 4b von den Lafettenbrücken 3a bzw. 3b des Schienenwaggons 2 auf den Bahnsteig 2 exakt unter die Aufnahmepunkte 1a bzw. 1b des Trailers 1. Nach erfolgtem Anheben des Trailers durch Betätigung der Hubvorrichtungen der Hublafetten 4a bzw. 4b laufen die Hublafetten 4a bzw. 4b mit dem Trailer zurück auf die Lafettenbrücken 3a bzw. 3b des Schienenwaggons 2. Anschließend werden die Lafettenbrücken 3a bzw. 3b um die Drehwinkel α₁ bzw. α₂ derart geschwenkt, daß ihre Längsachsen 6a bzw. 6b einen rechten Winkel mit der Längsachse des Schienenwaggons 2 einschließen und somit den Senkrechten 8a bzw. 8b entsprechen.

Die Stelleinrichtungen zur Drehung der Lafettenbrücken 3a und 3b können als hydraulische, pneumatische oder elektrische Vorrichtungen ausgebildet sein.

Vorzugsweise wird die Drehung der beiden Lafettenbrücken 3a bzw. 3b um den gleichen Drehwinkel α₁ = α₂ synchron erzeugt. In diesem Fall verlaufen die Laufwege der beiden Hublafetten 4a bzw. 4b stets parallel, so daß der zur Positionierung der Hublafetten 4a bzw. 4b notwendige korrekte Abstand unter den Aufnahmepunkten 1a bzw. 1b des Trailers 1 sichergestellt ist, auch wenn nur die Position eines der beiden Aufnahmepunkte, beispielsweise die Position des Aufnahmepunktes 1a, bekannt ist. Dabei wird vorausgesetzt, daß der Abstand zwischen den beiden Aufnahmepunkten 1a und 1b für unterschiedliche Trailer stets gleich ist und dem Abstand zwischen den vertikalen Symmetrieachsen 5a und 5b der Lafettenbrücken 3a und 3b entspricht.

### Bezugszeichenliste

- 1: Trailer
- 1a: Aufnahmepunkt des Trailers
- 1b: Aufnahmepunkt des Trailers
- 2: Schienenwaggon
- 3a: Lafettenbrücke
- 3b: Lafettenbrücke
- 4a: Hublafette
- 4b: Hublafette
- 5a: vertikale Symmetrieachse der Lafettenbrücke
- 5b: vertikale Symmetrieachse der Lafettenbrücke
- 6a: Längsachse der Lafettenbrücke
- 6b: Längsachse der Lafettenbrücke
- 7: Längsachse des Schienenwaggons
- 8a: Senkrechte zur Längsachse des Schienenwaggons
- 8b: Senkrechte zur Längsachse des Schienenwaggons
- 10: Schienenanlage
- 20: Bahnsteig

- α₁: Drehwinkel
- α₂: Drehwinkel

## Patentansprüche

1. Schienenwaggon zum Transport mindestens eines Trailers (1), welcher sich über mindestens zwei Hublafetten (4a, 4b) auf dem Schienenwaggon (2) abstützt, **dadurch gekennzeichnet, daß** mindestens zwei die Hublafetten (4a, 4b) aufnehmende Lafettenbrücken (3a, 3b) auf dem Schienenwaggon (2) befestigt sind, deren Längsachsen (6a, 6b) bezüglich der Längsachse (7) des Schienenwaggons (2) drehbar sind, wobei die Drehung um vertikale Symmetrieachsen (5a, 5b) der Lafettenbrücken erfolgt.

2. Schienenwaggon nach Anspruch 1, **gekennzeichnet durch** eine hydraulische Vorrichtung zur Drehung der Lafettenbrücke.

3. Schienenwaggon nach Anspruch 1, **gekennzeichnet durch** eine pneumatische Vorrichtung zur Drehung der Lafettenbrücke.

4. Schienenwaggon nach Anspruch 1, **gekennzeichnet durch** eine elektrische Vorrichtung zur Drehung der Lafettenbrücke.

5. Schienenwaggon nach einem der vorstehenden Ansprüche, **gekennzeichnet durch** eine Einrichtung zur Detektion der relativen Position zwischen der vertikalen Symmetrieachse (5a) mindestens einer Lafettenbrücke (3a) und mindestens einem Aufnahmepunkt (1a) eines Trailers (1).

6. Positionierverfahren zum Be- und Entladen eines Trailers (1) auf einem Schienenwaggon (2), **dadurch gekennzeichnet, daß** zur Aufnahme von Hublafetten (4a, 4b) geeignete, auf dem Schienenwaggon (2) befindliche Lafettenbrücken (3a, 3b) um ihre vertikalen Symmetrieachsen (5a, 5b) derart gedreht werden, daß ihre Längsachsen (6a, 6b) auf zur Abstützung auf die Hublafetten (4a, 4b) geeignete Aufnahmepunkte (1a, 1b) des Trailers (1) zeigen.

7. Positionierverfahren mach Anspruch 6, **dadurch gekennzeichnet, daß** die relative Position zwischen lediglich einem Aufnahmepunkt (1a) des Trailers (1) und einer Lafettenbrücke( 3a) ermittelt wird, worauf die Drehung von mindestens zwei Lafettenbrücken (3a, 3b) synchron um den gleichen Drehwinkel (α₁ = α₂) erfolgt.

## Claims

1. Railway wagon to transport at least one trailer (1) which is lowered on the railway wagon (2) by means of at least two lifting carriages (4a, 4b), **characterized in that** at least two undercarriages (3a, 3b), the longitudinal axes (6a, 6b) of which can be rotated relative to the longitudinal axis (7) of the railway wagon (2), the rotation taking place around vertical symmetrical axes (5a, 5b) of the undercarriages, are mounted on the railway wagon (2) for seating the lifting carriages (4a, 4b).

2. Railway wagon according to Claim 1, **characterized by** a hydraulic device for rotating the undercarriage.

3. Railway wagon according to Claim 1, **characterized by** a pneumatic device for rotating the undercarriage.

4. Railway wagon according to Claim 1, **characterized by** an electrical device for rotating the undercarriage.

5. Railway wagon according to any one of the above claims, **characterized by** an arrangement for detecting the relative position between the vertical symmetrical axis (5a) of at least one undercarriage (3a) and at least one support point (1a) of a trailer (1).

6. Positioning method for loading and unloading a trailer (1) on a railway wagon (2), **characterized in that** for the seating of lifting carriages (4a, 4b) suitable undercarriages (3a, 3b) located on the railway wagon (2) are rotated around their vertical symmetrical axes (5a, 5b), in such a way that their longitudinal axes (6a, 6b) are in line with support points (1a, 1b) of the trailer (1) suitable for supporting said trailer on the lifting carriages (4a, 4b).

7. Positioning method according to Claim 6, **characterized in that** the relative position, whereon at least two undercarriages (3a, 3b) are rotated synchronously around the same angle of rotation (α₁, = α₂), is determined between only one support point (1a) of the trailer (1) and one undercarriage (3a).

## Revendications

1. Wagon sur rails pour le transport au moins d'une remorque (1), s'appuyant au moyen de, au moins, deux glissières d'élévation (4a, 4b) sur le wagon sur rails (2), **caractérisé en ce que**, au moins deux ponts à glissière (3a, 3b) logeant les glissières d'élévation (4a, 4b) sont fixés au wagon sur rails (2), dont les axes longitudinaux (6a, 6b) peuvent tourner par rapport à l'axe longitudinal (7) du wagon sur rails (2), la rotation s'effectuant autour des axes de symétrie (5a, 5b) verticaux des ponts à glissière.

2. Wagon sur rails selon la revendication 1, **caractérisé par** un dispositif hydraulique pour faire tourner le pont à glissière.

3. Wagon sur rails selon la revendication 1, **caractérisé par** un dispositif pneumatique pour faire tourner le pont à glissière.

4. Wagon sur rails selon la revendication 1, **caractérisé par** un dispositif électrique pour faire tourner le pont à glissière.

5. Wagon sur rails selon une des revendications précédentes, **caractérisé par** une installation pour la détection de la position relative entre l'axe de symétrie (5a) vertical de, au moins, un pont à glissière (3a) et, au moins, un point de logement (1a) d'une remorque (1).

6. Procédé de positionnement pour la charge et la décharge d'une remorque (1) sur un wagon sur rails (2), **caractérisé en ce que**, pour loger les glissières d'élévation (4a, 4b), des ponts à glissière (3a, 3b) adéquats situés sur le wagon sur rails (2) tournent autour des axes de symétrie (5a, 5b) verticaux, de façon à ce que les axes longitudinaux (6a, 6b) présentent des points de logement (1a, 1b) adéquats pour l'appui de la remorque (1) sur les glissières d'élévation (4a, 4b).

7. Procédé de positionnement selon la revendication 6, **caractérisé par** le calcul de la position relative entre uniquement un point de logement (1a) de la remorque (1) et un pont à glissière (3a), sur laquelle s'effectue la rotation de, au moins, deux ponts à glissière (3a, 3b) de façon synchronisée autour du même axe de rotation (α₁=α₂).
